# FASCICULE DE BREVET EUROPEEN

(11) **EP 2 535 223 B1**
(45) Date de publication et mention de la délivrance du brevet: **15.05.2019**
(21) Numéro de dépôt: 12171086.7
(22) Date de dépôt: 06.06.2012
(51) Int. Cl.: B60P 3/20

(54) **Agencement de moyens de montage et de manipulation d'une cloison escamotable**
Anordnung der Montage- und Bedienungsmittel einer versenkbaren Trennwand
Arrangement of means for mounting and handling a retractable partition

(30) Priorité: 15.06.2011 FR 1155210
(43) Date de publication de la demande: 19.12.2012
(73) Titulaire: Pommier Italia S.r.l., 42100 Roncocesi (RE) (IT)
(72) Inventeur: Guidetti, Stefano, 42023 CADELBOSCO DI SOPRA/REGGIO EMILIA (IT)
(74) Mandataire: Berger, Helmut

(56) Documents cités:
- DE-U1- 20 002 002
- DE-U1- 29 807 865

## Description

La présente invention concerne un agencement de moyens de montage et de manipulation d'une cloison montée mobile en pivotement et en translation dans un compartiment de chargement d'un véhicule, selon le préambule de la revendication 1.

Les véhicules industriels de type fourgon, qu'il s'agisse de camions, de remorques ou de semi-remorques, ont un compartiment de chargement souvent si grand que se pose la question d'une division de ce compartiment en deux ou encore davantage de parties moyennant une ou plusieurs cloisons escamotables. Cette question se pose plus particulièrement dans le cas de véhicules frigorifiques où il peut être utile de pouvoir diviser le compartiment de chargement en plusieurs parties avec des températures différentes dans chacune d'elles.

Des solutions avec des cloisons escamotables ont déjà été proposées. Un exemple pour une telle cloison escamotable est décrit dans le document DE 200 02 002U1. L'agencement décrit dans ce document comporte des moyens de verrouillage de la cloison dans sa position escamotée, qui comprennent une butée élastique placée sur le plafond et des étriers de retenue disposés sur la plateforme et la paroi, de façon à être déplaçables dans une position dans laquelle le bord inférieur de la paroi lorsqu'elle est escamotée, est pris entre la butée et les étriers. Il s'agit donc de moyens de verrouillage à prévoir supplémentairement sur le plafond et les parois latérales du compartiment de chargement, ce qui constitue un inconvénient majeur, encore aggravé par le fait que, à l'état escamoté, la paroi doit se trouver dans une seule position prédéterminée par la position des moyens de verrouillage sur le plafond et les parois latérales du compartiment.

Le but de l'invention est de remédier à cet inconvénient.

Pour atteindre ce but, l'agencement selon l'invention comporte les caractéristiques énoncées dans la partie caractérisante de la revendication 1.

Les revendications dépendantes définissent davantage les particularités de l'invention.

D'autres caractéristiques et avantages de la présente invention ressortiront de la description ci-après d'un mode de réalisation de l'invention. La description est faite en référence aux dessins annexés dont
la figure 1 représente une vue latérale sur l'intérieur du compartiment de chargement d'une semi-remorque,
la figure 2 représente une cloison escamotable en position verticale,
la figure 3 représente la cloison de la figure 2 en position escamotée,
la figure 4 représente les moyens de montage de la cloison partiellement habillés avec un cache, la cloison étant en position escamotée,
la figure 5 représente les moyens de montage de la cloison escamotable sans cache, la cloison étant en position escamotée,
la figure 6 représente les moyens de montage de la cloison escamotable, la cloison étant en position verticale,
la figure 7 représente en détail le montage de la cloison dans un des deux rails et
la figure 8 représente en détail le montage de la cloison dans l'autre des deux rails.

La présente invention est décrite ci-après en référence à l'exemple non limitatif d'un véhicule frigorifique qui, en raison de sa grande longueur, comporte deux cloisons escamotables pour disposer d'une plus grande variabilité dans la division du compartiment de chargement. Des termes indiquant un positionnement tels « avant », « arrière », « devant » et « derrière » sont à comprendre par rapport au sens de la marche du véhicule et des termes de dimensions tels « hauteur » et « largeur » sont à comprendre par rapport à une cloison en position verticale.

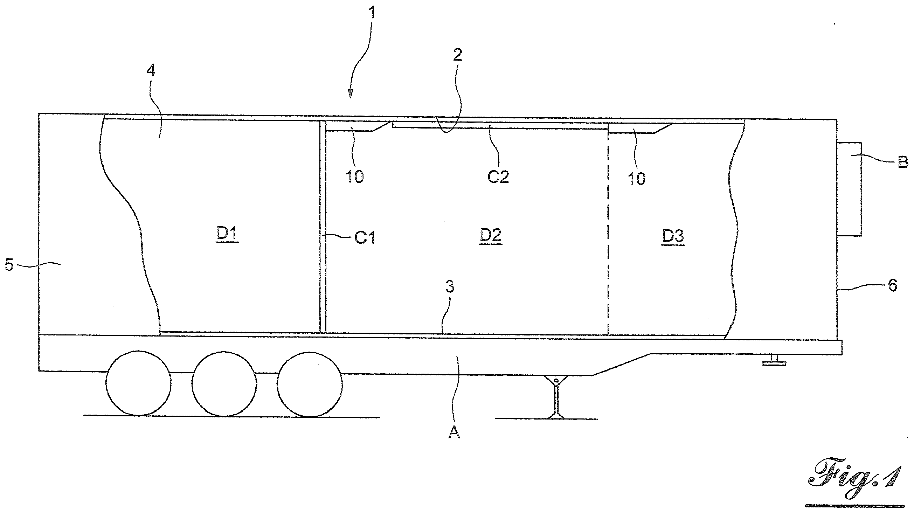

Le compartiment de chargement 1, qui est monté sur un châssis A, est un caisson comprenant un plafond 2, un plancher 3, des parois latérales 4, 5 ainsi qu'une paroi avant 6 sur laquelle est monté un équipement de refroidissement B, et une paroi arrière 7 généralement formée par deux battants de porte. Au plafond 2 du compartiment de chargement sont montés deux rails 8, 9 dans lesquels coulissent des chariots 10 portant des cloisons escamotables C1, C2. La figure 1 représente la cloison C1 en position verticale et la cloison C2 en position escamotée.

Lorsque les deux cloisons C1, C2 sont en position verticale, le compartiment de chargement du véhicule est divisé en trois parties D1, D2, D3. Et lorsque, comme représenté, une seule des deux cloisons escamotables C1, C2 est en position verticale, le compartiment de chargement est divisé en deux parties, ici une partie D1 et une partie D2 plus D3. La ligne en pointillés entre D2 et D3 indique la position verticale de la cloison C2 lorsqu'elle n'est pas en la position escamotée dessinée.

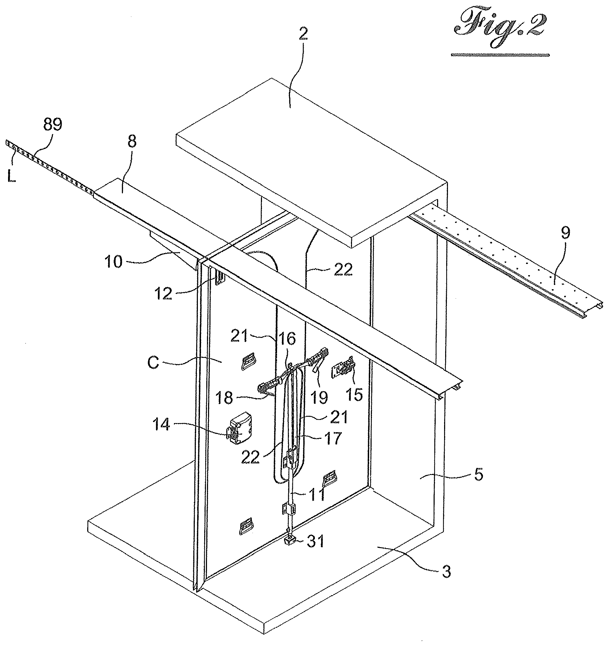

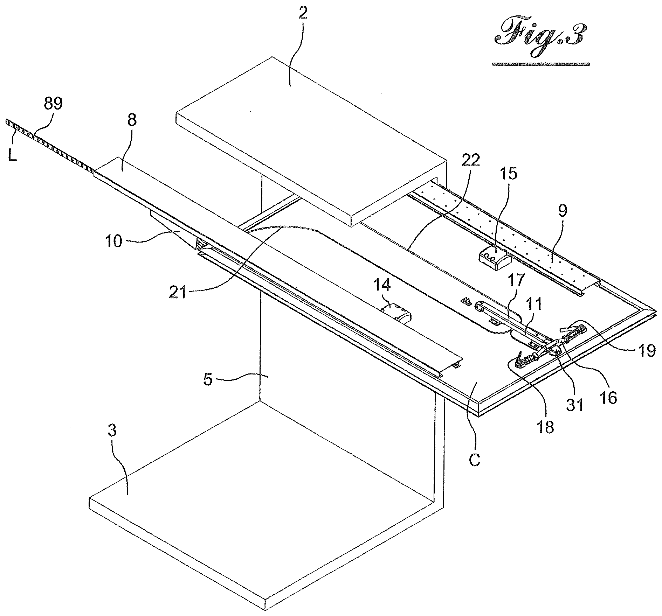

Les figures 2 et 3 sont des vues en perspective représentant une cloison C, qui peut être indifféremment la cloison C1 ou la cloison C2 de la figure 1, respectivement en position verticale et en position escamotée. Lorsque la cloison C est en position verticale, elle sépare la partie du compartiment de chargement située avant la cloison C, c'est-à-dire à gauche sur la figure 2, de la partie du compartiment de chargement qui est située derrière la cloison C, c'est-à-dire à droite sur la figure 2.

La cloison C est suspendue au plafond 2, de manière pivotante et coulissante, moyennant deux chariots 10 roulant dans des rails 8, 9 montés au plafond 2 du compartiment de chargement 1.

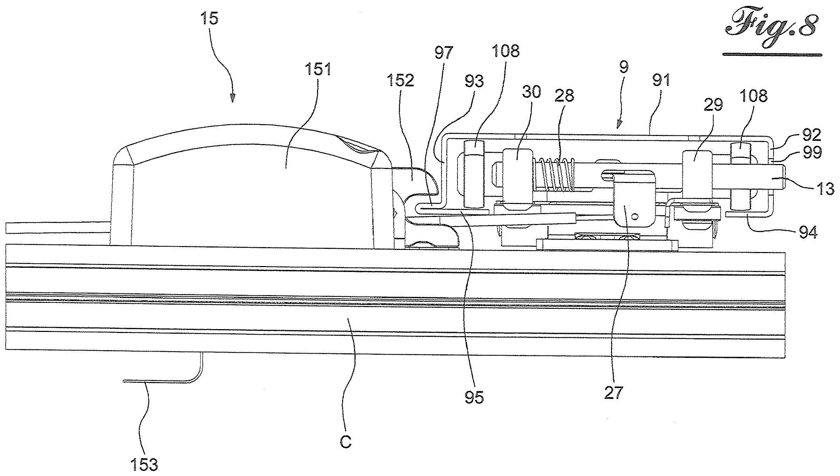

Le rail 8 est pourvu de trous d'immobilisation 89 permettant d'immobiliser les chariots 10 dans des positions de translation correspondant à celle de la cloison C. Des trous correspondants 99 sont formés dans le rail 9 (voir figure 8).

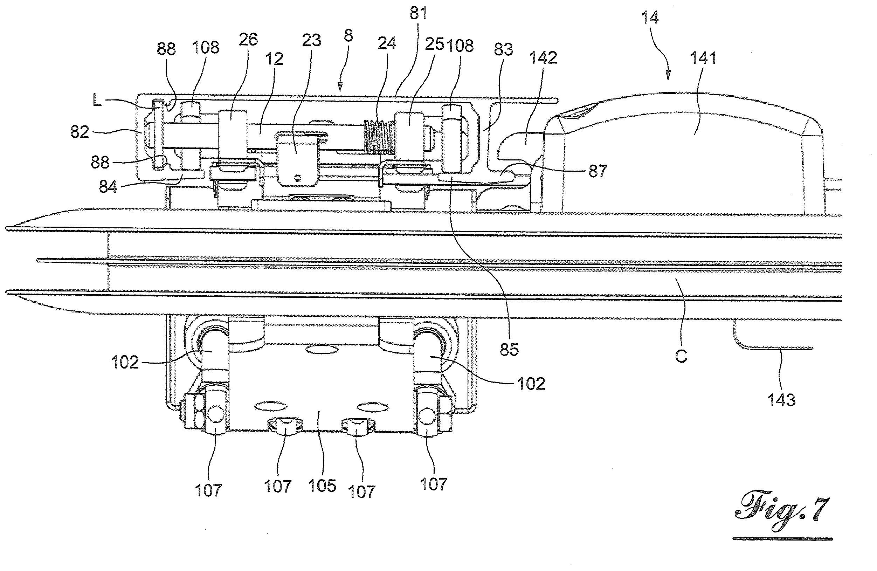

Sur la figure 2 et les figures suivantes, les rails 8, 9 sont représentés de manière différente pour montrer que l'on peut utiliser indifféremment des rails en aluminium 8 ou des rails en acier 9 qui se distinguent les uns des autres par leur conception, comme cela sera décrit en davantage de détails par rapport aux figures 7 et 8.

Afin de pouvoir immobiliser la cloison C aussi bien lorsqu'elle est en position verticale que lorsqu'elle est en position escamotée, elle est pourvue de cinq verrous 11 à 15 ainsi que d'une poignée 16 comportant deux manettes 18, 19 comme décrit ci-après, pour pouvoir actionner chacun des verrous selon la position de la cloison.

Lorsque la cloison C est en position verticale, elle est immobilisée d'une part par le verrou 11 qui est formé essentiellement par une barre mobile pourvue à son extrémité inférieure d'une tête d'appui 31 par laquelle elle bloque le bas de la cloison C par adhérence au plancher.

D'autre part, la cloison C et plus particulièrement le haut de la cloison est immobilisé en position verticale par les deux verrous 12, 13 disposés en haut de la cloison C de façon que des tiges mobiles (voir figures 7 et 8) puissent coopérer avec les trous 89 et 99 des rails 8 et 9.

Lorsque la cloison C est en position escamotée, elle est immobilisée, outre par les verrous 12 et 13, moyennant les verrous 14 et 15 disposés dans la partie inférieure de la cloison C et adaptés pour coopérer avec des rebords latéraux des rails 8, 9 comme cela est visible sur les figures 7 et 8.

Pour le verrouillage et le déverrouillage de la cloison C dans sa position verticale et dans sa position escamotée, le verrou 11 est actionné par la poignée 16 et les verrous 12 et 13 sont actionnés par les manettes 18, 19. La poignée 16 est montée horizontalement sur une barre 17 qui est, comme la barre 11, disposée dans le sens de la hauteur de la cloison C et est articulée sur la barre 11. Un pivotement de la barre 17 vers le bas de la cloison C provoque une translation correspondante de la barre 11 par laquelle la tête d'appui 31 est mise en appui sur le plancher 3 ce qui immobilise la cloison C. Et un pivotement de la barre 17 vers le haut de la cloison C provoque une translation correspondante de la barre 11 par laquelle la tête d'appui 31 est relevée ce qui libère l'adhérence et déverrouille la cloison C.

Dans cette même position verticale de la cloison C, les verrous 12 et 13 pour immobiliser la cloison C par rapport aux rails 8 et 9 sont actionnés par les manettes 18 et 19 disposées aux extrémités opposées de la poignée 16. La manette 18 est reliée au verrou 12 par un câble 21. De manière analogue, la manette 19 est reliée au verrou 13 par un câble 22. Comme cela ressort plus particulièrement des figures 2 et 3, les câbles 21 et 22 sont disposés sur la cloison 11 en serpentins pour, à la fois, tenir compte des rayons de courbure nécessaires aux câbles et pour permettre un basculement de la poignée 16 entre une position haute visible sur la figure 2 et une position basse visible sur la figure 3. Chacun des câbles 21, 22 agit sur la tige de verrouillage correspondante montée mobile à l'intérieur du verrou 12 ou 13.

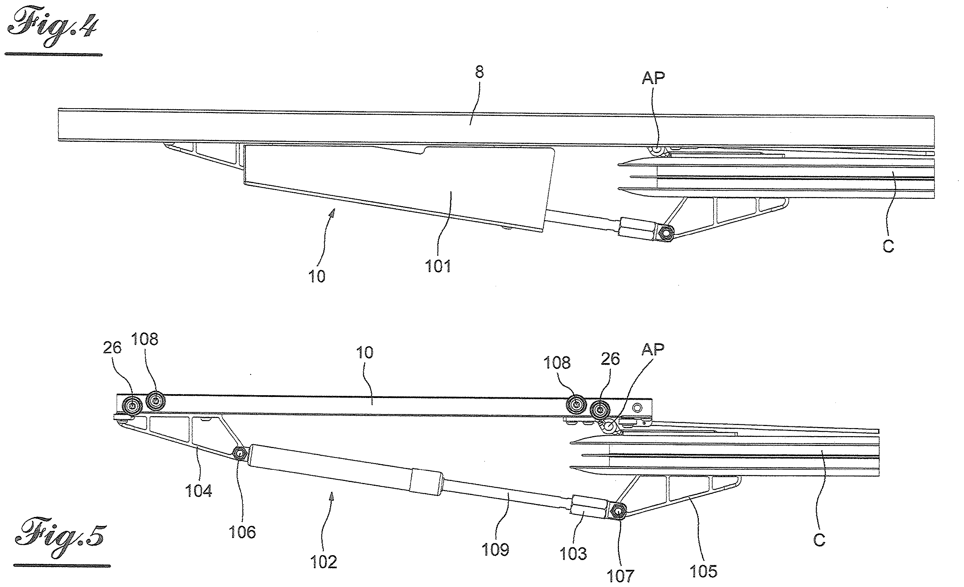

La figure 4 est une vue latérale sur le montage et l'articulation de la cloison C sur le rail 8, la cloison C montée pivotante autour d'un axe AP et représentée en position escamotée. Cette figure montre donc une partie du rail 8 avec un des deux chariots 10. Le chariot 10 est d'autres éléments de montage sont habillés par un cache 101.

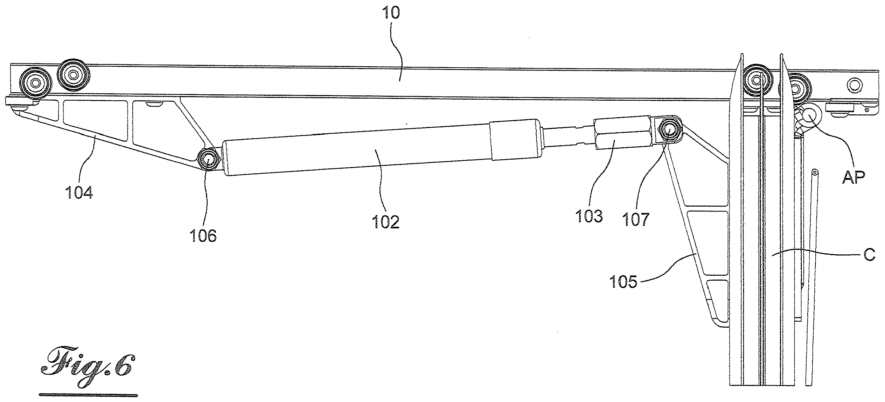

Les figures 5 et 6 représentent le chariot et les autres éléments de montage sans le cache 101 et avec la cloison C respectivement en position escamotée (figure 5) et en position verticale (figure 6).

Ces deux figures représentent les éléments essentiels du montage pivotant et mobile en translation de la cloison C, à savoir le chariot 10 sur lequel la cloison C est montée pivotante autour de l'axe AP qui se trouve partiellement plongé dans le rail 8, un compas releveur précontraint 102 avec des moyens de réglage 103 de la précontrainte, ainsi que des brides 104, 105 par lesquelles le compas releveur 102 est monté respectivement sur le chariot 10 et sur la cloison C. Le compas 102 est articulé aux brides 104, 105 par des articulations 106, 107. Les moyens de réglage 103 de la précontrainte du compas releveur 102 comprennent un pas de vis formé respectivement sur la tige 109 du compas et à l'intérieur de la douille portant la référence 103. En tournant la douille à la façon d'un écrou dans un sens ou dans l'autre, on fait rentrer la tige 109 plus ou moins loin dans la douille et fait varier ainsi la longueur totale à l'état monté du compas releveur 102 et par cela la pression minimale du compas lorsqu'il est le moins chargé.

Comme cela est visible plus particulièrement sur la figure 5, le compas releveur 102 n'est articulé directement ni sur le chariot 10 ni sur la cloison C mais est monté de façon transversalement espacée par rapport à l'étendue longitudinale du chariot 10 et de la cloison C, moyennant les brides 104, 105. Grâce à cette disposition, l'angle de pivotement du compas releveur 102 autour de l'articulation 106 entre la position qu'il occupe lorsque la cloison C est escamotée et celle lorsque la cloison est en position verticale, est moins grand que si le compas était monté directement sur le chariot 10. De plus, le décalage transversal de l'articulation 107 crée par rapport à l'axe de pivotement AP de la cloison C, un bras de levier facilitant au compas releveur 102 le travail et permettant au concepteur du véhicule de choisir des compas releveur moins forts et donc moins chers.

La figure 5, comme déjà la figure 4, illustre par ailleurs très clairement les mérites de la présente invention par rapport aux solutions antérieures. Lorsque la cloison C est escamotée, elle est disposée le long du plafond 2 à la suite de l'ensemble des moyens de montage et non pas en superposition de ceux-ci, ce qui prend beaucoup moins de place. En effet, du fait que la cloison C s'étend sur la largeur entière du compartiment de chargement 1, elle ne peut trouver, en position escamotée, de place entre les chariots. Elle ne peut trouver de place que sur les chariots, ce qui entraîne un espace vide non utilisable entre la cloison escamotée et le plafond.

Un autre avantage de la présente invention peut être constaté lorsque la cloison C est en position verticale. Dans cette position, les deux articulations 106, 107 du compas releveur 102 et l'articulation AP par laquelle la cloison C1 est attachée au chariot 10, sont alignés les uns sur les autres ou pour le moins très proches d'un tel alignement. Le compas releveur 102 qui se trouve alors en compression maximale peut développer sa poussée entièrement dès le début d'un relèvement de la cloison C lorsqu'elle est fait pivoter de la position verticale vers la position escamotée.

Encore un autre avantage de la disposition espacée du compas releveur 102 est une meilleure accessibilité aux articulations 106, 107 en cas de réparation. En effet, le montage pivotant de la cloison C est conçu de façon à donner à l'utilisateur du véhicule la possibilité de changer rapidement lui-même le compas releveur 102 ou de placer deux ou davantage de compas releveurs 102 identiques parallèlement les uns aux autres et d'adapter ainsi le soutien de relevage au poids de la cloison C ou selon d'autres critères. Les compas releveurs 102 sont choisis dans la gamme des compas habituellement commercialisés, ce qui facilite leur approvisionnement en cas de défaillance de l'un d'entre eux. En plus, les brides 104, 105 sont formées de façon à pouvoir recevoir jusqu'à 4 compas releveurs 102 parallèlement les uns aux autres, comme cela est représenté sur la figure 7.

La figure 7 représente le rail 8 en une vue axiale avec regard sur le verrou 12, le chariot 10 et la bride 105 et quatre articulations 107 de quatre compas releveurs 102. La figure 7 représente également une vue sur le verrou 14.

Le rail 8 est en aluminium et obtenu par extrusion. Le rail 8 est un profilé de section rectangulaire avec une grande face fermée 81, des faces latérales 82, 83 définissant la hauteur du rail 8 et une grande face ouverte dans le sens de la longueur du rail formée par deux retours 84, 85 partant des faces latérales 82, 83 vers l'intérieur du rail. Le rail 8 comprend en outre une extension 86 s'étendant dans le plan de la grande face 81 et prolongeant celle-ci au-delà de la face latérale 83 et une extension 87 s'étendant approximativement dans le même plan que les deux retours 84, 85 et prolongeant la dernière au-delà de la face latérale 83. Alors que la face fermée 81 et sa prolongation 86 servent au montage du rail 8 au plafond 2 du compartiment de chargement 1, les retours 84, 85 servent comme pistes de roulement pour des roues 108 moyennant lesquelles le chariot 10 est déplacé le long du rail 8. Les retours 84, 85 sont formés légèrement en biais par rapport à la face 81 de façon que les bords libres des retours 84, 85 sont moins espacés de la face 81 que si les retours 84, 85 s'étendaient parallèlement à la face 81. Cette légère pente symétrique des deux retours 84, 85 assure un centrage du chariot 10 dans le rail 8.

Le rail 8 est formé à l' intérieur du profilé du côté de la face latérale 82 avec deux arrêtes opposées 88 créant un espace 89 dans lequel est insérée une lame plate L pourvue des trous d'immobilisation 89 mentionnés en référence aux figures 2 et 3. C'est dans ces trous 89 que le verrou 12 s'engage lorsque la cloison C est immobilisée soit en position verticale soit en position escamotée. L'engagement dans et la sortie de ces trous 89 est obtenu moyennant le câble 21 agissant sur un levier 23 à l'encontre de l'effort d'un ressort 24 prenant appui sur un disque 25 du chariot 10. Le verrou 12 est par ailleurs logé coulissant aussi dans un disque 26 également solidaire du chariot 10.

La figure 7 représente également le verrou 14 dont on voit un boîtier 141, un loqueteau 142 et une manette 143 sortant du côté opposé de la cloison C par rapport au côté sur lequel est fixé le verrou 14. Lorsque la cloison C est en position escamotée, le loqueteau 142 s'engage sur le rail 8 au-dessus de l'extension 85. Lorsqu'il s'agit de faire pivoter la cloison C de la position escamotée vers la position verticale, l'opérateur fait rétracter le loqueteau 142 en agissant sur la manette 143.

On remarquera par ailleurs sur la figure 7 que le boîtier 141 du verrou 14 dépasse en hauteur la grande face fermée 81 du rail 8. Etant donné que le boîtier 141 est réalisé en une matière résiliente, le verrou 14, tout comme le verrou 15, remplit la fonction supplémentaire d'amortisseur pour la cloison C lorsque celle-ci est en position escamotée.

La figure 7 représente enfin la bride 105 avec quatre compas releveurs 102 en une vue dans le sens longitudinal de la bride 105 et de la cloison C escamotée. Cette vue illustre d'une part la possibilité évoquée de placer entre les deux brides 104, 105 jusqu'à quatre compas releveur 102. D'autre part, cette figure rappelle que les compas releveur 102 sont disposés en dessous de la bride 105 et non pas à côté d'elle. Cette disposition permet, ensemble avec la conception des verrous 12 et 13, de placer les rails 8 et 9 dans les angles supérieurs formés par le plafond 2 et les parois latérales 4 et 5.

La figure 8 représente, de manière inversée de côté, des éléments comparables à ceux de la figure 7, disposés sur un rail en acier 9. Le rail en acier 9 étant obtenu par pliage à partir d'une tôle d'épaisseur appropriée, cette conception rend possible de pourvoir le rail 9 des trous 99 sans devoir y prévoir un élément supplémentaire.

Le rail 9 est un profilé de section rectangulaire avec une grande face fermée 91, des faces latérales 92, 93 définissant la hauteur du rail 9 et une grande face ouverte dans le sens de la longueur du rail formée par deux retours 94, 95 partant des faces latérales 92, 93 vers l'intérieur du rail. Le rail 9 comprend en outre une extension 97 s'étendant approximativement dans le même plan que les deux retours 94, 95 et prolongeant la dernière au-delà de la face latérale 93. Alors que la face fermée 91 sert au montage du rail 9 au plafond 2 du compartiment de chargement 1, les retours 94, 95 servent comme pistes de roulement pour des roues 108 moyennant lesquelles le chariot 10 est déplacé le long du rail 9.

Les trous d'immobilisation 99 sont disposés sur la face latérale 92. C'est dans ces trous 99 que le verrou 13 s'engage lorsque la cloison C est immobilisée soit en position verticale soit en position escamotée. L'engagement dans et la sortie de ces trous 99 est obtenu moyennant le câble 22 agissant sur un levier 27 à l'encontre de l'effort d'un ressort 28 prenant appui sur un disque 30 du chariot 10. Le verrou 13 est par ailleurs logé coulissant aussi dans un disque 29 également solidaire du chariot 10.

La figure 8 représente également le verrou 15 dont on voit un boîtier 151, un loqueteau 152 et une manette 153 sortant du côté opposé de la cloison C par rapport au côté sur lequel est fixé le verrou 15. Lorsque la cloison C est en position escamotée, le loqueteau 152 s'engage sur le rail 9 au-dessus de l'extension 97. Lorsqu'il s'agit de faire pivoter la cloison C de la position escamotée vers la position verticale, l'opérateur fait rétracter le loqueteau 152 en agissant sur la manette 153.

On remarquera par ailleurs sur la figure 8 que le boîtier 151 du verrou 15 dépasse en hauteur la grande face fermée 91 du rail 9. Etant donné que le boîtier 151 est réalisé en une matière résiliente, le verrou 15 remplit la fonction supplémentaire d'amortisseur pour la cloison C lorsque celle-ci est en position escamotée.

## Revendications

1. Agencement de moyens de montage et de manipulation d'une cloison (C) mobile en pivotement et en translation dans un compartiment de chargement (1) d'un véhicule, les moyens comprenant au moins un chariot (10) monté coulissant le long d'un rail (8) longitudinal correspondant fixé au plafond (2) du compartiment de chargement (1), le chariot étant pourvu d'un axe transversal (AP) par lequel la cloison (C) est attachée au chariot (10) de façon à pouvoir pivoter entre une position verticale dans laquelle elle forme une cloison divisant le compartiment (1) en deux parties (D1, D2) et une position escamotée dans laquelle la cloison (C) est disposée le long du plafond (2) du compartiment (1), et le chariot (10) étant disposé par rapport à la cloison (C) du côté opposé par rapport à celui vers lequel la cloison (C) pivote pour atteindre la position escamotée, **caractérisé en ce qu'**il comprend au moins un verrou (14) disposé sur la cloison (C) pour immobiliser la cloison (C) lorsqu'elle est en position escamotée, le verrou (14) étant disposé de façon à s'engager, en position de verrouillage, sur une battue (87) du rail (8) correspondant.

2. Agencement selon la revendication 1, **caractérisé en ce qu'**il comprend pour le ou pour chacun des chariots (10) un verrou (12) disposé en haut de la cloison (C) ledit verrou comprenant des tiges mobiles qui coopèrent avec des trous d'immobilisation des rails (8, 9) de façon à pouvoir immobiliser en position horizontale et en position verticale le chariot (10) par rapport au rail (8) .

3. Agencement selon la revendication 1 ou 2, **caractérisé en ce que** les moyens de montage comprennent, par chariot (10), deux ou plus de compas releveur précontraints (102) identiques, les compas (102) étant tous disposés en dessous du chariot (10).

4. Agencement selon la revendication 2 ou 3, **caractérisé en ce qu'**il comprend un organe (16) d'actionnement du verrou (11), en forme d'une poignée, et des organes d'actionnement (18, 143) des verrous (12) (14), en forme de manettes.

5. Agencement selon l'une quelconque des revendications 1 à 4, **caractérisé en ce qu'**il comprend un verrou (11) pour immobiliser la cloison (C), lorsqu'elle est en position verticale.

6. Agencement selon l'une quelconque des revendications 3 à 5, **caractérisé en ce que** le ou chacun des compas releveur (102) comprend des moyens de réglage (103) de sa précontrainte.

## Patentansprüche

1. Anordnung von Montage- und Bedienungsmitteln einer in einem Ladeabteil (1) eines Fahrzeugs schwenkend und verschiebbar beweglichen Trennwand (C), wobei die Mittel mindestens einen Schlitten (10) umfassen, der entlang einer entsprechenden Längsschiene (8), die an der Decke (2) des Ladeabteils (1) befestigt ist, gleitend angebracht ist, wobei der Schlitten mit einer transversalen Achse (AP) versehen ist, durch welche die Trennwand (C) am Schlitten (10) derart angehängt ist, dass sie zwischen einer vertikalen Position, in welcher sie eine Trennwand bildet, welche das Abteil (1) in zwei Teile (D1, D2) trennt, und einer eingefahrenen Position, in welcher die Trennwand (C) entlang der Decke (2) des Abteils (1) angeordnet ist, schwenken kann, und wobei der Schlitten (10) in Bezug auf die Trennwand (C) auf der gegenüberliegenden Seite in Bezug auf die, zu der die Trennwand (C) schwenkt, um die eingefahrene Position zu erreichen, angeordnet ist, **dadurch gekennzeichnet, dass** sie mindestens einen Riegel (14) umfasst, der auf der Trennwand (C) angeordnet ist, um die Trennwand (C) zu blockieren, wenn sie in eingefahrener Position ist, wobei der Riegel (14) derart angeordnet ist, dass er in Verriegelungsposition auf einen entsprechenden Fuß (87) des Gleises (8) greift.

2. Anordnung nach Anspruch 1, **dadurch gekennzeichnet, dass** sie für den oder für jeden der Schlitten (10) einen Riegel (12) umfasst, der oben auf der Trennwand (C) angeordnet ist, wobei der Riegel bewegliche Stangen umfasst, die mit Blockierlöchern der Schienen (8, 9) derart zusammenwirken, dass der Schlitten (10) in Bezug auf die Schiene (8) in horizontaler Position und in vertikaler Position blockierbar ist.

3. Anordnung nach Anspruch 1 oder 2, **dadurch gekennzeichnet, dass** die Montagemittel je Schlitten (10) zwei oder mehr identische vorgespannte Hubzylindern (102) umfassen, wobei die Zylinder (102) alle unter dem Schlitten (10) angeordnet sind.

4. Anordnung nach Anspruch 2 oder 3, **dadurch gekennzeichnet, dass** sie ein Betätigungsorgan (16) des Riegels (11) in Form eines Griffs und Betätigungsorgane (18, 143) der Riegel (12) (14) in Form von Hebeln umfasst.

5. Anordnung nach einem der Ansprüche 1 bis 4, **dadurch gekennzeichnet, dass** sie einen Riegel (11) umfasst, um die Trennwand (C) zu blockieren, wenn sie in vertikaler Position ist.

6. Anordnung nach einem der Ansprüche 3 bis 5, **dadurch gekennzeichnet, dass** die oder jeder Hubzylinder (102) Einstellmittel (103) seiner Vorspannung umfasst.

## Claims

1. An arrangement of means for mounting and handling a partition (C) movable by pivoting and in translation in a loading compartment (1) of a vehicle, the means comprising at least one trolley (10) mounted sliding along a corresponding longitudinal rail (8) fastened to the ceiling (2) of the loading compartment (1), the trolley being provided with a transverse axis (AP) by which the partition (C) is attached to the trolley (10) so as to be able to pivot between a vertical position in which it forms a partition dividing the compartment (1) into two parts (D1, D2) and a retracted position in which the partition (C) is arranged along the ceiling (2) of the compartment (1), and the trolley (10) being positioned relative to the partition (C) on the opposite side relative to that toward which the partition (C) pivots to reach the retracted position, **characterized in that** it comprises at least one bolt (14) positioned on the partition (C) to immobilize the partition (C) when it is in the retracted position, the bolt (14) being arranged so as to engage, in the locking position, on a connecting piece (87) of the corresponding rail (8).

2. The arrangement according to claim 1, **characterized in that** it comprises, for the or for each of the trolleys (10), a bolt (12) arranged at the top of the partition (C), said bolt comprising moving rods that cooperate with immobilizing holes of the rails (8, 9) so as to be able to immobilize the trolley (10) in horizontal position and in vertical position relative to the rail (8).

3. The arrangement according to claim 1 or 2, **characterized in that** the mounting means comprise, per trolley (10), two or more identical prestressed lifting calipers (102), the calipers (102) all being arranged below the trolley (10).

4. The arrangement according to claim 2 or 3, **characterized in that** it comprises an actuating member (16) of the bolt (11), in the form of a handle, and actuating members (18, 143) of the bolts (12, 14), in the form of handles.

5. The arrangement according to any one of claims 1 to 4, **characterized in that** it comprises a bolt (11) for immobilizing the partition (C), when it is in the vertical position.

6. The arrangement according to any one of claims 3 to 5, **characterized in that** the or each of the lifting calipers (102) comprises means for adjusting (103) its prestress.
